# EUROPÄISCHE PATENTSCHRIFT

(11) **EP 1 881 147 B1**
(45) Veröffentlichungstag und Bekanntmachung des Hinweises auf die Patenterteilung: **17.12.2014**
(21) Anmeldenummer: 07014194.0
(22) Anmeldetag: 19.07.2007
(51) Int. Cl.: E06B 3/54, E04B 2/96, F16J 15/06, E06B 3/62, E06B 7/16

(54) **Auflagedichtung zwischen einem Füllelement und einem Rahmenprofil**
Sealing between a panel and a frame profil
Joint d'étanchéité entre un panneau et un profilé de cadre

(30) Priorität: 19.07.2006 DE 202006011255 U
(43) Veröffentlichungstag der Anmeldung: 23.01.2008
(73) Patentinhaber: Raico Bautechnik GmbH, 87772 Pfaffenhausen (DE)
(72) Erfinder: Vögele, Rainer, 86470 Thannhausen (DE)
(74) Vertreter: Charrier, Rapp & Liebau

(56) Entgegenhaltungen:
- DE-U1- 20 219 276
- DE-U1- 29 900 772
- DE-U1-202005 000 604
- US-A- 3 029 481

## Beschreibung

Die Erfindung bezieht sich auf eine Auflagedichtung nach dem Oberbegriff des Anspruchs 1.

Eine derartige Auflagedichtung ist aus der Druckschrift DE 20 2005 000 604 U1 bekannt. In dieser ist eine Dichtungsanordnung für Fassaden oder Lichtdächer mit einem Dichtungsprofil gezeigt, welche einen Verschluss in Form eines Steges aufweist, der eine Nut des Dichtungsprofils verschließt. Bei Bedarf kann dieser Steg entfernt werden so dass die Nut freiliegt und zur Aufnahme eines weiteren Dichtelements verwendet werden kann. Zum einfachen Lösen des Steges sind Sollbruchstellen vorgesehen.

Es ist Aufgabe der Erfindung, eine Auflagedichtung der eingangs genannten Art dahingehend zu verbessern, dass die Auflagedichtung einfach zu montieren ist und bei der Montage kein Abfall anfällt.

Diese Aufgabe wird durch eine Auflagedichtung mit den Merkmalen des Anspruchs 1 gelöst.

Die Erfindung zeichnet sich insbesondere dadurch aus, dass durch eine dünne Haut des Dichtungsmaterials der Kanal unterhalb dieser dünnen Haut vollständig abgedeckt wird. Um ein leichteres Eindringen der Verbindungseinrichtung zu ermöglichen, ist es möglich, diese Haut in der Mitte zu verjüngen, sodass eine Art keilförmige Einschneidung als Sollbruchstelle entsteht. Es ist selbstverständlich auch möglich, dass man die Haut an der Sollbruchstelle beispielsweise mit einem Cutmesser einfach einschneidet und somit ein Eindringen der Verbindungseinrichtung ermöglicht. Die jetzt in die Aufnahmenut hineinweisenden Teile der Abdeckvorrichtung bilden dabei gleichzeitig einen Teil eines Befestigungsmittels, um die Verbindungseinrichtung sicher in der Aufnahmenut zu halten. Die Verbindungseinrichtung ist dabei bevorzugt keilförmig ausgebildet, und besitzt jedoch zum Dichtungskörper hin eine Verjüngung, sodass insgesamt eine Art Pfeil entsteht. Die Aufnahmenut ist dabei korrespondierend ausgebildet, sodass eine formschlüssige Verbindung entsteht. Die in die Aufnahmenut hineingedrückten Teile der Abdeckung sorgen für eine zusätzliche Befestigung, sodass insgesamt eine sehr sichere Verbindung der beiden Dichtungsprofile, beziehungsweise zwischen dem Dichtungsprofil und der Verbindungseinrichtung erfolgen kann. Im Gegensatz zu der Lösung nach dem deutschen Gebrauchsmuster 20 2005 000 604, bei welcher vorgeschlagen wird, dass ein entfernbarer Steg vorgesehen ist, der die Nut verschließt, ist der hier gemachte Vorschlag deutlich einfacher. Der entfernbare Steg führt nach dem Stand der Technik zu einem zusätzlichen Arbeitsschritt, da der Steg einzeln abgerissen, also entfernt werden muss. Die Erfindung hingegen belässt den Verschluss an seiner Stelle und schlägt vor, dass bei Bedarf ein entsprechender Schlitz eingearbeitet wird, der den Verschluss öffnet und so die Aufhahmenut freigibt. Hierzu ist kein zusätzlicher Arbeitsschritt notwendig, und das Öffnen der Aufnahmenut erfolgt ohne zusätzlichen Abfall. Neben einem vollständigen Öffnen mit Hilfe des Schlitzes ist es natürlich erfindungsgemäß in gleicher Weise möglich, dass der Verschluss punktuell durchstochen wird und so die Verbindungseinrichtung in die Aufnahmenut für Verbindungszwecke eindringt. Aufgrund der Einsteckbewegung der Verbindungseinrichtung werden diese Verschlussteile klemmend in die Nut hineingezogen und erhöhen so die Klemm- beziehungsweise Verbindungswirkung zwischen der Verbindungseinrichtung und dem Dichtungsprofil.

Günstig ist es, dass eine farbliche Markierung des Verschlusses beziehungsweise des Verschluss-Sollbruchbereiches vorgesehen ist. Eine solche farbliche Markierung erleichtert die Montage erheblich, da der Monteur bereits mit einem Blick erkennt, wo die entsprechenden Teile miteinander zu verbinden sind. Auch falls mit einem Werkzeug der Schlitz einzuarbeiten ist, unterstützt die Farbcodierung die Bearbeitung erheblich und führt zu einer schnelleren und effektiveren Bearbeitung beziehungsweise Montage.

Günstigerweise wird vorgeschlagen, eine spitze oder kantige Ausgestaltung des in Bewegungsrichtung auf das Dichtungsprofil mit der Aufnahmenut vorne angeordnetem Ende des Verbindungsbereiches vorzusehen. Ein so ausgebildetes Ende wirkt als Schneide oder Durchstoßspitze durch den Verschluss und ermöglicht es, dass das Ende des Verschlusses so in die Aufnahmenut eindringt. Dabei wird geschickterweise der Verschluss-Sollbruchbereich durch das Ende durchdrungen.

Die Erfindung umfasst des Weiteren eine Fassade mit einem Tragprofil in Pfosten-Riegel-Bauweise und mindestens einem Füllelement, insbesondere einer Glasscheibe sowie eine Auflagedichtung gemäß den oben beschriebenen Merkmalen. Die Auflagedichtung dichtet das Füllelement am Tragprofil ab, ist somit in einem variablen Baukastensystem mit möglichst vielen standardisierten Bauteilen und geringen unterschiedlichen Bauteilen verfügbar. Die aufdoppelbare Auflagedichtung ist dabei hocheffizient und ressourcenschonend.

Des Weiteren umfasst die Erfindung auch ein Fenster, welches aus einem Rahmen und einem Füllelement besteht, welches eine Auflagedichtung aufweist, die das Füllelement am Rahmen abdichtet. Neben dieser Variante ist aber auch ein weiteres Fenster Gegenstand der Erfindung, bei welchem das Fenster aus einem Rahmen besteht, welcher das Füllelement, insbesondere eine Glasscheibe, trägt, und der bewegbare, insbesondere schwenkbare Rahmen in einem Stockrahmen gelagert ist und zwischen Stockrahmen und Rahmen eine Auflagedichtung wie beschrieben angeordnet ist. In dieser Variante ist das Fenster (bestehend aus einem als Glasscheibe oder Isolierglasscheibe dienenden Füllelement und einem Rahmen) selber das "Füllelement", und der Spalt zwischen dem als Stockrahmen ausgebildeten Tragprofil und dem Fenster ist durch die Auflagedichtung abzudichten. Auch diese Variante gehört zur Erfindung. Bei der vorbeschriebenen Variante ist es grundsätzlich möglich, dass die erfindungsgemäße Auflagedichtung zweifach eingesetzt wird, nämlich einmal beim Abdichten des Spaltes zwischen der Glasscheibe und dem Rahmen und zum anderen zwischen dem Rahmen und dem Stockrahmen.

Üblicherweise wird das Dichtungsprofil zum Beispiel in einem Extrusionsverfahren hergestellt. Durch die Ausgestaltung der Formmaske ist es möglich, den Verschluss als entsprechend dünnwandige Haut zu realisieren. Der Vorteil liegt darin, dass in einem Bearbeitungsschritt das Dichtungsprofil fertig gestellt ist. Es können auch Zieh- oder Blasverfahren zur Realisierung der erfindungsgemäßen Auflagedichtung mit einem einstückig angeordneten Verschluss am Dichtungsprofil verwendet werden.

Die Anlagefläche dient dazu, zum Beispiel eine Anlagefläche für ein anderes Dichtungsprofil oder auch für die Verbindungseinrichtung beziehungsweise dem Füllelement, je nach Realisierung der Auflagedichtung, zur Verfügung zu stellen.

Es versteht sich, dass die vorstehend genannten und nachstehend noch zu erläuternden Merkmale nicht nur in der jeweilig angegebenen Kombination, sondern auch in anderen Kombinationen verwendbar sind.

Die Erfindung wird im Folgenden anhand mehrerer Ausführungsbeispiele erläutert. Es zeigen:
- Fig. 1: einen schematischen Querschnitt einer Auflagedichtung gemäß einer ersten beispielhaften Ausführungsform;
- Fig. 2: einen schematischen Querschnitt einer Auflagedichtung gemäß einer zweiten beispielhaften Ausführungsform;
- Fig. 3: einen Querschnitt einer Auflagedichtung gemäß einer dritten beispielhaften Ausführungsform;
- Fig. 4: einen Querschnitt einer vierten beispielhaften Ausführungsform;
- Fig. 5: einen Querschnitt einer beispielhaften Auflagedichtung gemäß einer fünften Ausführungsform;
- Fig. 6: eine Unteransicht einer Auflagedichtung gemäß der zweiten und dritten Ausführungsform;
- Fig. 7: eine Draufsicht der zweiten, vierten und fünften Ausführungsform;
- Fig. 8: einen Querschnitt einer Auflagedichtung gemäß einer sechsten Ausführungsform;
- Fig. 9: einen Querschnitt einer hutförmigen Aufsatzdichtung mit beidseitig angeordneten beispielhaften Auflagedichtungen;
- Fig. 10: einen schematischen Querschnitt der in Fig. 9 gezeigten Aufsatzdichtung mit eingesetzten Füllelementen unterschiedlicher Stärke;
- Fig. 11: im Querschnitt zwei verschiedene Varianten eines Dichtungsprofiles;
- Fig. 12: im Schnitt eine Auflagedichtung;
- Fig. 13: im Schnitt eine in einer Hutdichtung realisierte erfindungsgemäße Auflagedichtung;
- Fig. 14: eine Variante der erfindungsgemäßen Auflagedichtung;
- Fig. 15: ein Detail entsprechend des Ausschnittkreises nach Fig. 14;
- Fig. 16: eine weitere Variante der erfindungsgemäßen Auflagedichtung in einer Hutdichtung;
- Fig. 17: eine weitere Variante der Erfindung im Schnitt;
- Fig. 18: ein vergrößertes Detail entsprechend des Ausschnittkreises nach Fig. 17;
- Fig. 18a: ein Schlitzwerkzeug und
- Fig. 18b: ein vergrößertes Detail nach dem Einsatz des in Fig. 18a gezeigten Werkzeuges an der Verschluss-Sollbruchstelle nach Fig. 18.

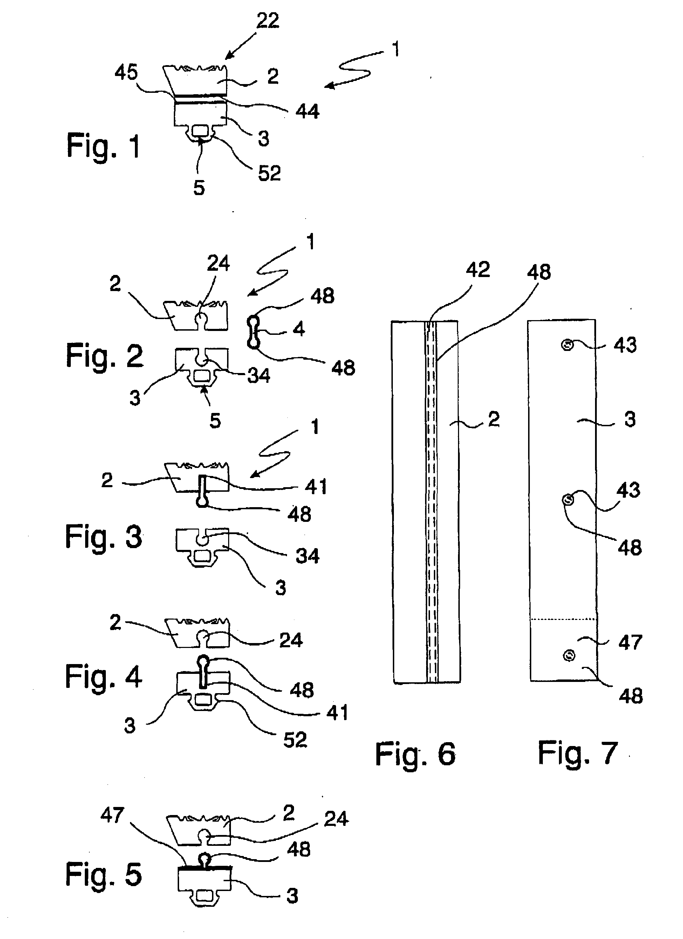

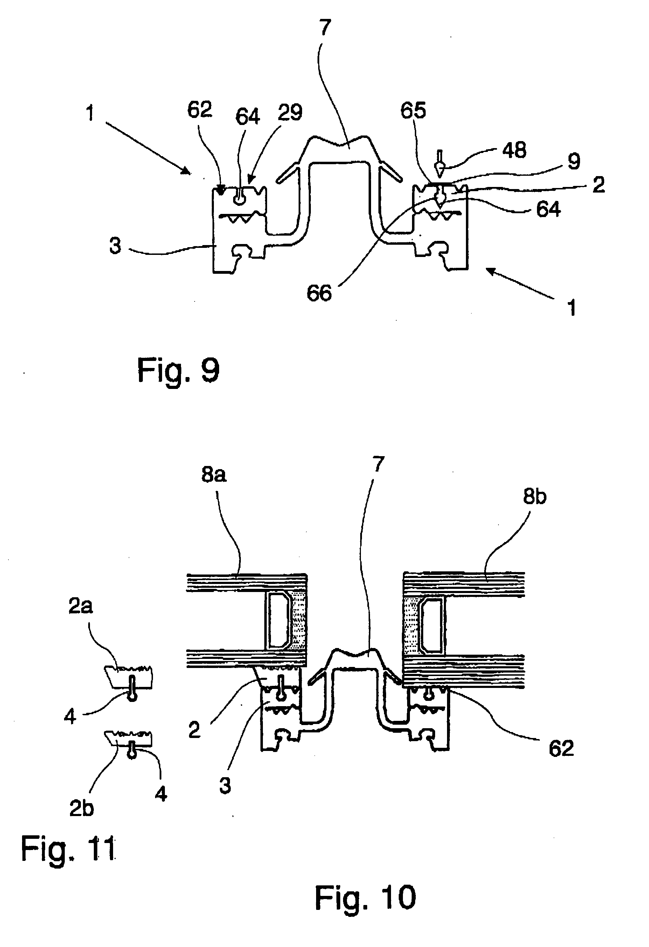

Die Fig. 1 zeigt im Querschnitt eine Auflagedichtung 1 für ein Tragprofil einer Fassade mit einem ersten Dichtungsprofil 2 und einem zweiten Dichtungsprofil 3 kurz vor einer Aufdoppelung. Unter Aufdoppelung wird das Verbinden eines ersten Dichtungsprofils 2 mit einem zweiten Dichtungsprofil 3 oder einem Zwischendichtungsprofil 6 verstanden. Die Auflagedichtung 1 dichtet ein nicht gezeigtes Füllelement, gewöhnlich eine Glasscheibe, an der Fassade zum Tragprofil oder an einer Fenster- oder Türfassade zum Rahmen hin ab. Das erste Dichtungsprofil 2 weist zur Glasseite mehrere Dichtlippen 22 auf, um die Glasscheibe beziehungsweise das Füllelement gegenüber dem Tragprofil sicher abzudichten und eventuelle Ungleichmäßigkeiten auszugleichen. Das erste oder zweite Dichtungsprofil 2, 3 oder ein Zwischendichtungsprofil 6 ist notwendig, um verschiedene Glasstärken der Glasscheiben in einer Fassade oder Fensterwänden auszugleichen, wie beispielhaft in Fig. 10 gezeigt ist und um ein Ineinandergreifen der Auflagedichtung 1 an einem Tragprofil mit Pfosten und Riegeln zu ermöglichen. Das Ineinandergreifen der Auflagedichtung 1 an Pfosten und Riegeln ist wichtig, um eine möglichst gute Abdichtung zu erzielen.

Am zweiten Dichtungsprofil 3 ist ein Befestigungsansatz 5 auf der dem ersten Dichtungsprofil 2 gegenüberliegenden Seite ausgebildet. Der Befestigungsansatz 5 hat eine im Querschnitt gesehen abstehende Trapezform, so dass zwei konisch aufspreizende Flächen eine widerhakenförmige Hervorhebung 52 ausbilden, die als Hohlprofil ausgebildet ist. Der Befestigungsansatz 5 kann natürlich auch an einer anderen Seite, das heißt seitlich angeordnet sein. Der Befestigungsansatz 5 kann auch am ersten Dichtungsprofil 2 oder am Zwischendichtungsprofil 6 ausgebildet sein. Es versteht sich, dass der Befestigungsansatz 5 jede andere aus dem Stand der Technik bekannte Form aufweisen kann, die Ausnehmungen und Hervorhebungen aufweist, um eine schlüssige Verbindung herzustellen, die durch leichten Kraftaufwand hergestellt oder gelöst wird. Der Befestigungsansatz 5 dient dazu, die Auflagedichtung 1 am Tragprofil zu befestigen.

Die Fig. 1 zeigt als erste besondere Ausführungsform eine Verbindungseinrichtung 4, die ein Hakenband 44 und ein Schlaufenband 45 aufweist. Das Hakenband 44 und das Schlaufenband 45 sind jeweils gegenüberliegend am ersten Dichtungsprofil 2 und am zweiten Dichtungsprofil 3 befestigt. Dabei spielt es keine Rolle, ob das Hakenband 44 am ersten Dichtungsprofil 2 und das zweiten Dichtungsprofil 3 mit dem Schlaufenband 45 oder genau umgekehrt verbunden ist. Das Hakenband 44 und das Schlaufenband 45 ist jeweils mit dem jeweiligen Profil 2 beziehungsweise 3 verklebt beziehungsweise verschweißt. Eine derartige klettverschlußartige Verbindungseinrichtung 4 aus Hakenband 44 und Schlaufenband 45 lässt sich mit geringem Kraftaufwand bei der Montage lösen beziehungsweise verbinden.

Die Fig. 2 zeigt im Querschnitt eine Auflagedichtung 1 gemäß einer zweiten Ausführungsform. Die Unterschiede zur Auflagedichtung 1 gemäß der ersten Ausführungsform sind, dass die Verbindungseinrichtung 4 nicht klettverschlußartig ausgebildet ist, sondern ein Verbindungselement als Verbindungseinrichtung 4 aus einem härteren Werkstoff als dem des ersten Dichtungsprofils 2 und des zweiten Dichtungsprofils 3 hergestellt ist und mit dem ersten Dichtungsprofil 2 und dem zweiten Dichtungsprofil 3 eine formschlüssige Verbindung ausbildet. Das Verbindungselement ist aus vorzugsweise Hart-PVC, oder koextrudierbarem ABS oder PA oder dünnem Metall, wie Edelstahl oder Aluminium gefertigt.

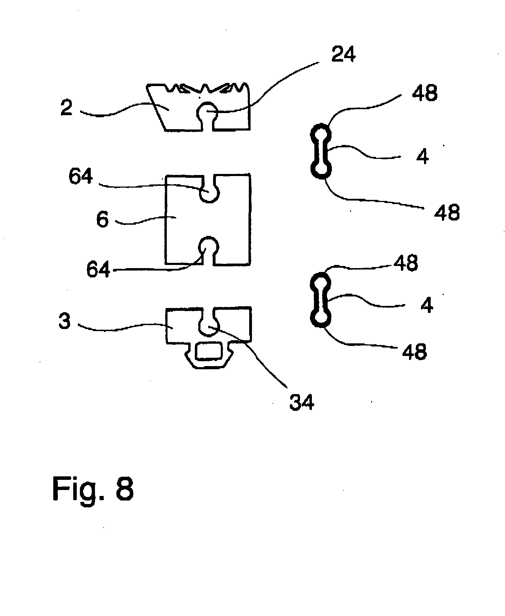

Die Verbindungseinrichtung 4, die als eine Schiene 42 oder als ein Stift 43 ausgebildet sein kann, weist an den gegenüberliegenden Enden Verbindungsköpfe als Verbindungsbereich 48 auf. Der Verbindungskopf bzw. -bereich 48 ist im Querschnitt gesehen kreisförmig und wird von einer Aufnahmenut 24, 34 als Ausnehmung mit Hinterschneidung vom jeweiligen Profil 2 beziehungsweise 3 aufgenommen. Eine derartige Verbindung lässt sich bei der Montage leicht zusammenfügen und gegebenenfalls leicht trennen. Aufgrund dieses Baukastensystems können unterschiedliche Dicken beziehungsweise Höhen der aufgedoppelten Auflagedichtung 1 hergestellt werden, um Dicken- beziehungsweise Höhenunterschiede beim nicht gezeigten Füllelement auszugleichen. Es kann beispielsweise ein standardisiertes erstes Dichtungsprofil 2 oder umgekehrt ein standardisiertes zweites Dichtungsprofil 3, oder wie zu Fig. 8 beschrieben, sowohl ein standardisiertes erstes Dichtungsprofil 2 als auch ein standardisiertes zweites Dichtungsprofil 3, sowie eine standardisierte Verbindungseinrichtung 4 verwendet werden, wobei der Höhenausgleich durch das jeweilige erste, zweite oder dritte Dichtungsbeziehungsweise Zwischendichtungsprofil 2, 3, 6 mit der speziellen Höhe als Ausgleich oder durch Weglassen des ersten Dichtungsprofils 2 oder des Zwischendichtungsprofils 6 erzielt wird.

Die Fig. 3 zeigt eine spezielle dritte Ausführungsfbrm der Ausführungsform gemäß der Fig. 2. Bei dieser Ausführungsform weist die Verbindungseinrichtung 4 nur einen Verbindungskopf 48 an einem Ende auf. Das andere Ende der Verbindungseinrichtung 4 ist mittels eines Stiels 41 in das erste Dichtungsprofil 2 eingeklebt, eingeschweißt oder mittels Reibschluß eingesteckt, eingeschossen oder eingepresst. Eine Aufnahmenut 34 als Ausnehmung zur Aufnahme des Verbindungskopfes 48 weist das zweite Dichtungsprofil 3 auf.

Die Fig. 4 zeigt eine zur Fig. 3 umgekehrt angeordnete Verbindungseinrichtung 4. Hier ist die Verbindungseinrichtung 4 mit dem zweiten Dichtungsprofil 3 verklebt oder verschweißt oder mittels Reibschluß eingesteckt. Auf die Verbindungseinrichtung 4 wird das erste Dichtungsprofil 2 aufgesteckt.

Die Fig. 5 zeigt eine weitere fünfte Ausführungsform, die der Ausführungsform gemäß der Fig. 4 ähnelt. Der Verbindungskopf 48 wird auch hier in die Unterseite des ersten Dichtungsprofils 2 in die Aufnahmenut 24 eingesteckt. Das gegenüberliegende Ende zum Verbindungskopf 48 ist jedoch flächig als Plättchen mit einer Verbindungsfläche 47 ausgebildet, das sich über die Breite des zweiten Dichtungsprofils 3 erstreckt. Das Plättchen ist mit seiner Verbindungsfläche 47 auf das zweite Dichtungsprofil 3 geklebt oder verschweißt.

Die Fig. 6 zeigt eine Ansicht von unten auf das erste Dichtungsprofil 2 gemäß der in den Figuren 2 und 3 gezeigten Ausführungsform. Die Fig. 6 verdeutlicht, dass die Verbindungseinrichtung 4 als Schiene 42 ausgebildet ist. Die Fig. 6 könnte genauso auch die Draufsicht auf das zweite Dichtungsprofil 3 gemäß der Figuren 4 und 5 sein. An einem Steg des Verbindungselementes ist ein Verbindungskopf 48 angeordnet. Das Verbindungselement ist im Profil 2, 3 verklebt oder verschweißt.

Die Fig. 7 zeigt die Verbindungseinrichtung 4 als Stifte 43 ausgebildet. Die Stifte 43 sind in regelmäßigen Abständen mittig im zweiten Dichtungsprofil 3 angeordnet. Jeder Stift 43 ist entweder eingeklebt oder eingeschweißt oder mittels Reibschluß eingesteckt. Die Verwendung eines Stifts 43 hat den Vorteil, dass die Auflagedichtung 1 vor der Montage für längere Fassaden aufgerollt sein kann und bei der Montage entrollt werden kann, wobei dabei jeweils ein Stift 43 in festem Abstand zur Verbindung in das Profil 2 oder 3 eingebracht wird. Die Fig. 7 zeigt, durch eine gestrichelte Linie angedeutet, die Draufsicht gemäß der Ausführungsform der Fig. 5. Der Verbindungskopf 48 ist auf einem Plättchen als Verbindungsfläche 47 angeordnet, die wiederum am zweiten Dichtungsprofil 3 befestigt ist.

Da die Verbindungseinrichtung 4 aus einem harten Werkstoff, vorzugsweise einem Hartkunststoff-PVC oder Edelstahl hergestellt ist, ist ein Aufrollen der Verbindungseinrichtung für längere Auflagedichtungen 1 überhaupt nicht möglich. Die Auflagedichtung 1 kann für ein Tragprofil an einer Fassade aufgedoppelt werden, in dem ein Verbindungselement mit einem Verbindungskopf 48 zumindest in ein erstes Dichtungsprofil 2 oder in ein zweites Dichtungsprofil 3 gesteckt wird. Das Ende mit dem Stiel 41 des Verbindungselements ist entweder im entsprechenden Gegenprofil 2 oder 3 eingeklebt oder eingeschweißt oder durch Reibschluß eingesteckt.

Die Fig. 8 zeigt im Querschnitt beispielhaft und schematisch eine Auflagedichtung 1 gemäß einer sechsten Ausführungsform. Bei dieser Ausführungsform umfasst die Verbindungseinrichtung 4 ein Zwischendichtungsprofil 6 sowie entsprechende weitere Verbindungselemente gemäß den vorher beschriebenen Ausführungsformen. Bei diesem besonderen Ausführungsbeispiel ist die Verbindungseinrichtung 4 mit dem Zwischendichtungsprofil 6, das verschiedene Höhen zum Glasstärkenausgleich aufweisen kann und Aufnahmenuten 64 umfasst, also wie mit zwei Verbindungselementen ähnlich der Ausführungsform gemäß der Fig. 2 ausgebildet.

Beide Verbindungselemente weisen somit zwei doppelseitige Verbindungsköpfe 48 auf, die in eine Aufnahmenut 24 des ersten Dichtungsprofils 2 und in die Aufnahmenut 64 des Zwischendichtungsprofils 6 beziehungsweise in die Aufnahmenut 34 des zweiten Dichtungsprofils 3 und die entsprechende Aufnahmenut 64 des Zwischendichtungsprofils 6 formschlüssig einsteckbar sind. Bei dieser Ausführungsform können standardisierte erste Dichtungsprofile 2 und zweite Dichtungsprofile 3 sowie standardisierte Verbindungselemente eingesetzt werden. Verschieden ist nur die Höhe des Zwischendichtungsprofils 6, das gegebenenfalls, wie dies in der Fig. 2 gezeigt ist, auch weggelassen werden kann. Es versteht sich, dass die Verbindungen zwischen dem Zwischendichtungsprofil und dem ersten Dichtungs- beziehungsweise zweiten Dichtungsprofil entsprechend der Ausgestaltungen der Figuren 1 bis 5 beziehungsweise als Klebefläche mit zwei unterschiedlich stark anhaftenden Seiten ausgebildet sein können.

Die Fig. 9 zeigt schematisch im Querschnitt eine Aufsatzdichtung als Hutdichtung 7, insbesondere für ein Pfostenprofil eines Tragprofils einer Fassade. An den beiden Schenkeln des zu einem Hut umgekehrten U-Profils ist jeweils eine Auflagedichtung einstückig ausgebildet. Die Hutdichtung 7 ist, wie in der Fig. 9 gezeigt, mit dem zweiten Dichtungsprofil 3 verbunden. Bei einer nicht gezeigten Aufsatzdichtung für ein Riegelprofil ist die Hutdichtung 7 am Zwischendichtungsprofil 6 verbunden.

Es versteht sich, dass die Aufsatzdichtung auch mehrteilig, wie beispielsweise in der Patentanmeldung DE 10 2006 025 041 beschrieben, eine Hutdichtung 7 aus einem härteren Kunststoff umfassen kann, wobei beidseitig eingeschobene beziehungsweise aufgenommene Auflagedichtungen 1 aus einem weicheren Kunststoff, beispielsweise EPDM oder TPE, hergestellt sind.

Bei der in der Fig. 9 gezeigten Auflagedichtung 1 ist das zweite Dichtungsprofil 3 mit dem Zwischendichtungsprofil 6 über einen Schamierbereich 36 einstückig verbunden. Da das Zwischendichtungsprofil 6 auch direkt zu einem nicht gezeigten Füllelement 8 abdichten kann, weist die Seite hierzu jeweils Dichtlippen 62 auf. Außerdem ist das Zwischendichtungsprofil 6 mit einer Aufnahmenut 64 ausgestattet, um ein erstes Dichtungsprofil 2 mit einer Verbindungseinrichtung 4 aufnehmen zu können.

Die Fig. 9 zeigt auf der rechten Bildseite eine besondere Ausführungsform einer Aufnahmenut 64 und eines Verbindungsbereichs 48 auf. Die Aufnahmenut 64 ist hier mit einem übertrieben gezeichneten Verschluss 9 abgedeckt. Dies hat den Vorteil, dass die Aufnahmenut 64 nicht verschmutzt und somit passsicher gehalten wird, da Schmutz die Verbindungseigenschaften beeinträchtigen kann. Der Verschluss 9 ist eine den Eintrittsbereich 65 der Aufnahmenut 64 abdeckende dünne Haut oder ein Filmstreifen. Der Filmstreifen kann entweder vor dem Verbinden/Aufdoppeln der nicht ausführlich dargestellten Verbindungseinrichtung abgezogen werden. Im Falle eines hautartigen Verschlusses 9 wird der Verschluss durch einen spitzen, vorzugsweise keilförmigen Verbindungsbereich 48 durchtrennt und wird dann in die Aufnahmenut 64 eingeschoben.

Die Fig. 10 zeigt die Aufsatzdichtung in Form einer Hutdichtung 7 gemäß der Fig. 9 mit eingesetzten Füllelementen 8a und 8b. Das Füllelement 8b hat eine größere Stärke als das Füllelement 8a. Deshalb ist in der Fig. 10 auf der linken Seite die Auflagedichtung mit einem ersten Dichtungsprofil 2 über eine Verbindungseinrichtung 4 auf ein Zwischendichtungsprofil 6 aufgedoppelt. Auf der gegenüberliegenden Seite der Hutdichtung 7, bei dem dickeren Füllelement 8b, schließt das Zwischendichtungsprofil 6 mit seinen Dichtlippen 62 direkt am Füllelement 8b an.

Die Fig. 11 zeigt als alternative Ausführungsform, dass das erste Dichtungsprofil 2 in der Höhe variiert ausgeführt sein kann, nämlich ein erstes Dichtungsprofil 2a mit einer größeren Dichtungshöhe und ein weiteres erstes Dichtungsprofil 2b mit einer kleineren Dichtungshöhe, das jeweils in die Aufnahmenut 64 eingeführt werden kann.

Somit ist eine baukastenfähige aufdoppelbare Glasdichtung für Fenster, Türen und Fassaden geschaffen worden.

In Fig. 11 sind verschiedene Dichtungsprofile 2a, 2b gezeigt, deren Höhe unterschiedlich ist. In diese eingesteckt ist eine separate, als Leiste ausgebildete Verbindungseinrichtung 4.

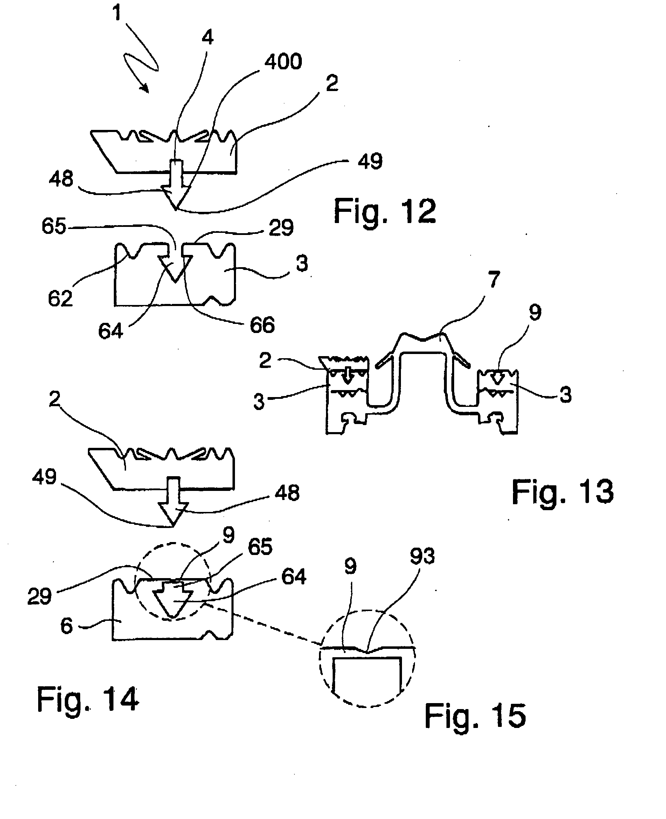

In Fig. 12 ist in einer vergrößerten Darstellung das Zusammenwirken zweier Dichtungsprofile 2, 3, nachfolgend auch als erstes (2) und zweites (3) Dichtungsprofil bezeichnet, gezeigt. Der Verbindungsbereich 48 der Verbindungseinrichtung 4 ist dabei im Schnitt gesehen dreieckig mit einer nach unten vorstehenden Spitze 49 ausgestattet. Sie ist dazu vorgesehen, in den Eintrittsbereich 65 in die Aufnahmenut 64, die in diesem Ausführungsbeispiel ebenfalls dreieckig im Schnitt gezeichnet ist, einzugreifen. Widerhaken beziehungsweise Hinterschneidungen 66 am oberen Rand der Aufnahmenut 64 erschweren ein Herausziehen der Verbindungseinrichtung 4 aus dem zweiten Dichtungsprofil 3, da dessen vorstehende Schultern 400 sich an der Hinterschneidung 66 widerhakenartig festhalten.

Die in Fig. 12 auf der Oberseite des unten vorgesehenen zweiten Dichtungsprofiles 3 angedeutete Begrenzungsfläche ist als Anlagefläche 29 gekennzeichnet, sie ist unterteilt beziehungsweise aufgeteilt durch die Aufnahmenut 64. In dem hier gezeigten Ausführungsbeispiel ist die Aufnahmenut 64 offen, also nicht verschlossen. Um zu vermeiden, dass Schmutz eindringt, ist der Eintrittsbereich 65 verhältnismäßig schmal.

In dem in Fig. 14 gezeigten erfindungsgemäßen Ausführungsbeispiel ist der unter Umständen breitere Eintrittsbereich 65 verschlossen durch einen Verschluss 9. Fig. 15 zeigt eine Vergrößerung des Verschlusses 9, durch eine Materialverjüngung ergibt sich ein Verschluss-Sollbruchbereich 93, der sich kerben- oder leistenartig entlang des gesamten Verschlusses auf der Oberseite in der Anlagefläche 29 erstreckt, bevorzugt parallel zur Aufnahmenut 64.

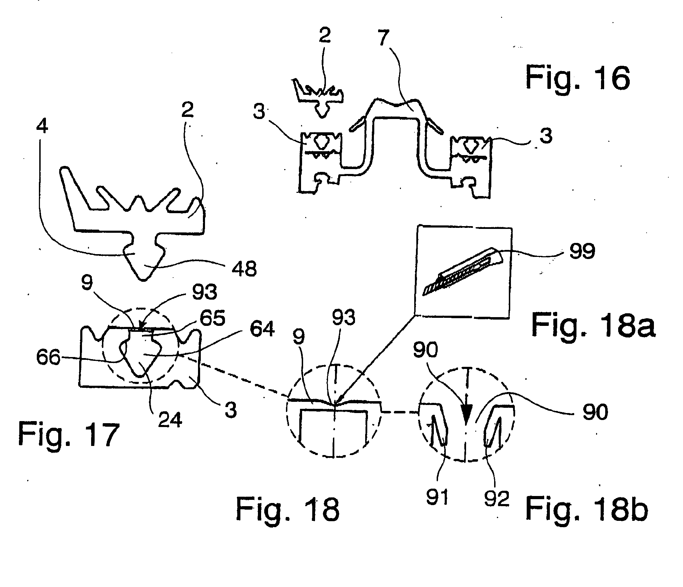

Das scharfkantig oder spitz zum Beispiel speerartig ausgebildete Ende 49 des Verbindungsbereiches 48 durchstößt bevorzugt den Verschluss 9 gerade im Verschluss-Sollbruchbereich 93. Diese Durchbrechung kann entlang der gesamten Länge oder nur punktuell, je nach Ausgestaltung der Verbindungseinrichtung 4, erfolgen. In Fig. 17 ist eine weitere erfindungsgemäße Variante gezeigt. Bei der hier gezeigten Ausgestaltung kommt es nicht zwingend darauf an, ob der Verbindungsbereich 48 aus gleichem oder andersartigem Material besteht wie das Dichtungsprofil 3, an welches es einstückig angeformt ist. Wie beschrieben kann dieser Verbindungsbereich 48 einstückig mit diesem, zum Beispiel durch Coextrusion hergestellt sein (dann gegebenenfalls auch aus anderem Material). In dem hier gezeigten Anwendungsfall aber wird ebenfalls eine Variante als offenbart gezeigt, in welcher der Verbindungsbereich aus dem gleichen Material wie das Dichtungsprofil 3 ist, also verhältnismäßig weich. In dem hier gezeigten Ausführungsbeispiel soll also der Verbindungsbereich 48 alternativ entweder härter sein wie das Dichtungsprofil 3 oder aus dem gleichen Material.

In dem hier gezeigten Ausführungsbeispiel ist in dem unteren, zweiten Dichtungsprofil 3 wiederum die Aufnahmenut 24 verdeckt durch den Verschluss 9, der einen Verschluss-Sollbruchbereich 93 aufweist.

An Stelle der in Fig. 14 gezeigten scharfkantigen Ausprägung des Endes 49 des Verbindungsbereiches 48 wird in Fig. 18a ein Schlitzwerkzeug 99 vorgeschlagen, das bevorzugt den Verschluss-Sollbruchbereich 93 aufschlitzt (vergleiche Fig. 18, Vergrößerung von Fig. 17) und so den Verschluss 9 teilt in zwei Verschlussteile 91, 92 unter Ausbildung eines dazwischenliegenden Schlitzes 90, der die Aufnahmenut 64 freigibt. Die Verschlussteile 91, 92 verbleiben am Dichtungsprofil und klappen in die Aufnahmenut 64.

## Patentansprüche

1. Auflagedichtung (1) zum Abdichten eines Spaltes zwischen einem Füllelement (8) und einem Rahmenprofil einer Fassade oder in einem Fenster, wobei die Auflagedichtung (1) ein Dichtungsprofil (3) enthält und eine Anlagefläche (29) des Dichtungsprofils (3) einen zunächst geschlossenen und bei Bedarf durch einen Schlitz (90) auftrennbaren Verschluss (9) mit einem durch eine Materialverjüngung gebildeten Verschluss-Sollbruchbereich (93) aufweist und wobei der Schlitz (90) eine Aufnahmenut (64) für die Aufnahme eines Verbindungsbereichs (48) eines weiteren Dichtungsprofils (2) freigibt, **dadurch gekennzeichnet, dass** der Verschluss-Sollbruchbereich (93) in der Mitte des durch eine dünne Haut des Dichtungsmaterials gebildeten Verschlusses (9) angeordnet ist.

2. Auflagedichtung nach Anspruch 1, **dadurch gekennzeichnet, dass** der Verschluss (9) einstückig mit dem Dichtungsprofil (3) ausgebildet ist.

3. Auflagedichtung nach Anspruch 1 oder 2, **dadurch gekennzeichnet, dass** der Verschluss-Sollbruchbereich (93) farblich markiert ist.

4. Auflagedichtung nach einem der Ansprüche 1 bis 3, **dadurch gekennzeichnet, dass** der Verbindungsbereich (48) des weiteren Dichtungsprofils (2) im Schnitt gesehen dreieckig ist und mit einer nach unten vorstehenden Spitze (49) ausgestattet ist, die dazu vorgesehen ist, in den Eintrittsbereich (65) der im Schnitt dreieckigen und mit Hinterschneidungen (66) am oberen Rand versehenen Aufnahmenut (64) des Dichtungsprofils (3) einzugreifen.

5. Auflagedichtung nach einem der Ansprüche 1 bis 4, **dadurch gekennzeichnet, dass** sich der Verschluss-Sollbruchbereich (93) kerben- oder leistenförmig entlang des gesamten Verschlusses (9) auf der Oberseite der Anlagefläche (29) erstreckt.

6. Auflagedichtung nach einem der vorhergehenden Ansprüche, **dadurch gekennzeichnet, dass** der Verbindungsbereich (48) einstückig an dem weiteren Dichtungsprofil (2) angeformt ist und entweder härter wie das Dichtungsprofil (2) ist oder aus dem gleichen Material besteht.

7. Fassade mit einem Tragprofil in Pfosten-Riegel-Bauweise mit mindestens einem Füllelement (8) und einer Auflagedichtung (1), **dadurch gekennzeichnet, dass** die Auflagedichtung (1) nach einem der Ansprüche 1 bis 6 ausgebildet ist.

8. Fenster mit einem Rahmen, einem Füllelement (8) und einer Auflagedichtung (1), **dadurch gekennzeichnet, dass** die Auflagedichtung (1) nach einem der Ansprüche 1 bis 6 ausgebildet ist.

## Claims

1. Seal (1) for sealing a gap between a filling element (8) and a frame profile of a façade or in a window, wherein the seal (1) comprises a seal profile (3) and a bearing face (29) of the seal profile (3) exhibits a closure (9) which is initially closed and when necessary can be cut open by a slit (90) and has a closure design break region (93) formed by a material taper and wherein the slit (90) exposes a receiving groove (64) for receiving a connecting region (48) of a further seal profile (2), **characterised in that** the closure design break region (93) is arranged in the middle of the closure (9) formed by a thin skin of the seal material.

2. Seal according to claim 1, **characterised in that** the closure (9) is formed in one piece with the seal profile (3).

3. Seal according to claim 1 or 2, **characterised in that** the closure design break region (93) is marked in colour.

4. Seal according to one of claims 1 to 3, **characterised in that** the connecting region (48) of the further seal profile (2) is triangular when viewed in section and is provided with a downwardly projecting point (49) which is designed to engage in the entry region (65) of the receiving groove (64) of the seal profile (3) which is triangular in section and provided with undercuts (66) at the upper edge.

5. Seal according to one of claims 1 to 4, **characterised in that** the closure design break region (93) extends in the form of a notch or bead along the entire closure (9) on the upper side of the bearing face (29).

6. Seal according to one of the preceding claims, **characterised in that** the connecting region (48) is moulded in one piece to the further seal profile (2) and is either harder than the seal profile (2) or made of the same material.

7. Façade with a carrying profile of mullion and transom design with at least one filling element (8) and a seal (1), **characterised in that** the seal (1) is embodied according to one of claims 1 to 6.

8. Window with a frame, a filling element (8) and a seal (1), **characterised in that** the seal (1) is embodied according to one of claims 1 to 6.

## Revendications

1. Joint d'étanchéité de support (1) servant à étanchéifier un interstice entre un élément de remplissage (8) et un profil de châssis d'une façade ou dans une fenêtre, sachant que le joint d'étanchéité de support (1) comporte un joint d'étanchéité profilé (3) et qu'une surface d'appui (29) du joint d'étanchéité profilé (3) comprend une fermeture (9) dans un premier temps fermée et, si besoin, pouvant être ouverte par une entaille (90), pourvue d'une zone de rupture théorique de fermeture (93) formée par une réduction de matériau, et sachant que l'entaille (90) libère une rainure de réception (64) servant à recevoir une zone de jonction (48) d'un autre joint d'étanchéité profilé (2), **caractérisé en ce que** la zone de rupture théorique de fermeture (93) est disposée au centre de la fermeture (9) formée par une fine membrane du matériau d'étanchéité.

2. Joint d'étanchéité de support selon la revendication 1, **caractérisé en ce que** la fermeture (9) est réalisée d'un seul tenant avec le joint d'étanchéité profilé (3).

3. Joint d'étanchéité de support selon la revendication 1 ou 2, **caractérisé en ce que** la zone de rupture théorique de fermeture (93) est marquée par une couleur.

4. Joint d'étanchéité de support selon l'une quelconque des revendications 1 à 3, **caractérisé en ce que** la zone de jonction (48) de l'autre joint d'étanchéité profilé (2) est, en coupe, rectangulaire et est dotée d'une pointe (49) faisant saillie vers le bas, laquelle est prévue pour venir en prise avec la zone d'entrée (65) de la rainure de réception (64), rectangulaire en coupe et pourvue de contre-dépouilles (66) au niveau du bord supérieur, du joint d'étanchéité profilé (3).

5. Joint d'étanchéité de support selon l'une quelconque des revendications 1 à 4, **caractérisé en ce que** la zone de rupture théorique de fermeture (93) s'étend le long de toute la fermeture (9), sur le côté supérieur de la surface d'appui (29), de manière à présenter une forme d'encoche ou une forme de baguette.

6. Joint d'étanchéité de support selon l'une quelconque des revendications précédentes, **caractérisé en ce que** la zone de jonction (48) est formée d'un seul tenant au niveau de l'autre joint d'étanchéité profilé (2) et est plus dure que le joint d'étanchéité profilé (2) ou est constituée du même matériau.

7. Façade comprenant un profilé porteur selon une structure poteaux-traverses, comprenant au moins un élément de remplissage (8) et un joint d'étanchéité de support (1), **caractérisée en ce que** le joint d'étanchéité de support (1) est réalisé selon l'une quelconque des revendications 1 à 6.

8. Fenêtre comprenant un châssis, un élément de remplissage (8) et un joint d'étanchéité de support (1), **caractérisée en ce que** le joint d'étanchéité de support (1) est réalisé selon l'une quelconque des revendications 1 à 6.
